(19) Europäisches Patentamt / European Patent Office / Office européen des brevets

(11) **EP 4 657 777 A1**

(12) **EUROPEAN PATENT APPLICATION**
published in accordance with Art. 153(4) EPC

(43) Date of publication:
**03.12.2025 Bulletin 2025/49**

(21) Application number: **23929974.6**

(22) Date of filing: **22.11.2023**

(51) International Patent Classification (IPC):
*H04J 3/16* (2006.01)　　*H04W 72/04* (2023.01)

(52) Cooperative Patent Classification (CPC):
**H04J 3/06; H04J 3/16; H04Q 11/00; H04W 72/04**

(86) International application number:
**PCT/CN2023/133262**

(87) International publication number:
**WO 2024/198406 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.03.2023　CN 202310357696**

(71) Applicant: **ZTE Corporation**
**Shenzhen, Guangdong  518057 (CN)**

(72) Inventors:
• WANG, Peng
　Shenzhen, Guangdong 518057 (CN)
• LI, Chunbo
　Shenzhen, Guangdong 518057 (CN)
• ZHANG, Lin
　Shenzhen, Guangdong 518057 (CN)
• YUAN, Liquan
　Shenzhen, Guangdong 518057 (CN)
• ZHANG, Weiliang
　Shenzhen, Guangdong 518057 (CN)

(74) Representative: **Aipex B.V.**
**Vestdijk 51**
**5611 CA Eindhoven (NL)**

(54) **METHOD FOR IMPLEMENTING TIME-SENSITIVE NETWORK BY MEANS OF PASSIVE OPTICAL NETWORK SYSTEM, DEVICE, AND MEDIUM**

(57)　　Provided are a method for implementing a time-sensitive network for a passive optical network system, a device, and a medium. The method includes: performing time synchronization by broadcasting a time synchronization future superframe and a timestamp; determining a TSN packet entrance, a TSN packet exit, and delay information; controlling the TSN packet entrance and the TSN packet exit to schedule a TSN packet according to the delay information; and reducing the window duration of the TSN packet and increasing the DBA frequency of the TSN packet. In this manner, the TSN is implemented through the PON system, the transmission delays of TSN packets are reduced, data transmission jitters are reduced, and the performance requirements of service scenarios for the TSN are satisfied.

| | |
|---|---|
| Perform time synchronization by broadcasting a time synchronization future superframe and a timestamp | S110 |
| Determine a TSN packet entrance, a TSN packet exit, and delay information | S120 |
| Control the TSN packet entrance and the TSN packet exit to schedule a TSN packet according to the delay information | S130 |
| Reduce the window duration of the TSN packet and increase the DBA frequency of the TSN packet | S140 |

**FIG. 1**

**Description**

TECHNICAL FIELD

The present application relates to the field of optical communication technologies, for example, a method for implementing a time-sensitive network for a passive optical network system, a device, and a medium.

BACKGROUND

With the continuous development of a passive optical network (PON), fiber to the home (FTTH) has been fully rolled out, and fiber to the room (FTTR) has been developed faster and faster. The Optical Line Terminal (OLT), the Optical Network Unit (ONU), the main FTTR unit (MFU), and the sub FTTR unit (SFU) have also been widely used. In the PON system, according to different transmission convergence (TC) layer protocols, PON devices may be divided into the Ethernet passive optical network (EPON) device, the 10G Ethernet passive optical network (10G EPON) device, the Gigabit-capable passive optical network (GPON) device, the 10-Gigabit-capable passive optical network (XGPON) device, the 10-Gigabit-capable symmetric passive optical network (XGSPON) device, and the 50G Higher Speed PON (HSPON) device, as well as 100GPON, 200GPON, and very higher speed passive optical networks (VHSP). These PON system architectures generally include the OLT, the ONU, and the Optical Distribution Network (ODN). FTTR networks generally include the MFU, the SFU, and the indoor fiber distribution network (IFDN).

In the PON system, uplink and downlink scheduling for different modes of PON access technology generally adopts priority scheduling, weight scheduling, scheduling based on the priority and weight, and the like. For example, a single transmission container (TCONT) of the ONU or SFU generally contains 4 to 8 queues with different priorities or weights. When the bandwidth is insufficient, low-priority queue packets are transmitted after high-priority queue packets are transmitted. For queue packets with the same priority, packets are scheduled based on the weights. Due to the influence of the Serial Number (SN) request window, the ranging window, and the Dynamically Bandwidth Assignment (DBA) scheduling cycle, the traditional packet scheduling manner often has unstable forwarding delays, as well as relatively large delays and jitters, failing to satisfy the time-sensitive network (TSN) service requirements of the industrial PON system or other service scenarios that are sensitive to delays and jitters.

SUMMARY

The main object of the embodiments of the present application is to provide a method for implementing a time-sensitive network for a passive optical network system, a device, and a medium, aiming to implement the TSN through the PON system, reduce the transmission delays of TSN packets, reduce data transmission jitters, and satisfy the performance requirements of service scenarios for the TSN.

An embodiment of the present application provides a method for implementing a time-sensitive network for a passive optical network system. The method includes the following operations.

Time synchronization is performed by broadcasting a time synchronization future superframe and a timestamp.

A TSN packet entrance, a TSN packet exit, and delay information are determined.

The TSN packet entrance and the TSN packet exit are controlled to schedule a TSN packet according to the delay information.

The window duration of the TSN packet is reduced and the DBA frequency of the TSN packet is increased.

An embodiment of the present application further provides an electronic device. The electronic device includes one or more processors and a memory configured to store one or more programs.

When executed by the one or more processors, the one or more programs cause the one or more processors to perform the method for implementing a time-sensitive network for a passive optical network system according to any embodiment of the present application.

An embodiment of the present application further provides a computer-readable storage medium storing one or more programs which, when executed by one or more processors, cause the one or more processors to perform the method for implementing a time-sensitive network for a passive optical network system according to any embodiment of the present application.

BRIEF DESCRIPTION OF DRAWINGS

FIG. 1 is a flowchart of a method for implementing a time-sensitive network for a passive optical network system according to an embodiment of the present application.

FIG. 2 is a flowchart of another method for implementing a time-sensitive network for a passive optical network system according to an embodiment of the present application.

FIG. 3 is an example diagram of a method for implementing a time-sensitive network for a passive optical network system according to an embodiment of the present application.

FIG. 4 is an example diagram of TSN scheduling according to an embodiment of the present application.

FIG. 5 is an example diagram of another type of TSN scheduling according to an embodiment of the present application.

FIG. 6 is an example diagram of another type of TSN scheduling according to an embodiment of the present application.

FIG. 7 is an example diagram of another type of TSN scheduling according to an embodiment of the present application.

FIG. 8 is an example diagram of another type of TSN scheduling according to an embodiment of the present application.

FIG. 9 is a schematic diagram of a downlink superframe for broadcasting according to an embodiment of the present application.

FIG. 10 is a schematic diagram of another downlink superframe for broadcasting according to an embodiment of the present application.

FIG. 11 is a schematic diagram of a downlink timestamp according to an embodiment of the present application.

FIG. 12 is a diagram illustrating the structure of an apparatus for implementing a time-sensitive network for a passive optical network system according to an embodiment of the present application.

FIG. 13 is a diagram illustrating the structure of an electronic device according to an embodiment of the present application.

DETAILED DESCRIPTION

It is to be understood that the embodiments described herein are intended to explain the present application, not to limit the present application.

In the subsequent description, a word such as "module", "component", or "unit" for representing an element is used merely to facilitate the description of the present application and has no particular meaning in itself. Therefore, "module", "component", and "unit" may be used in a mixed manner.

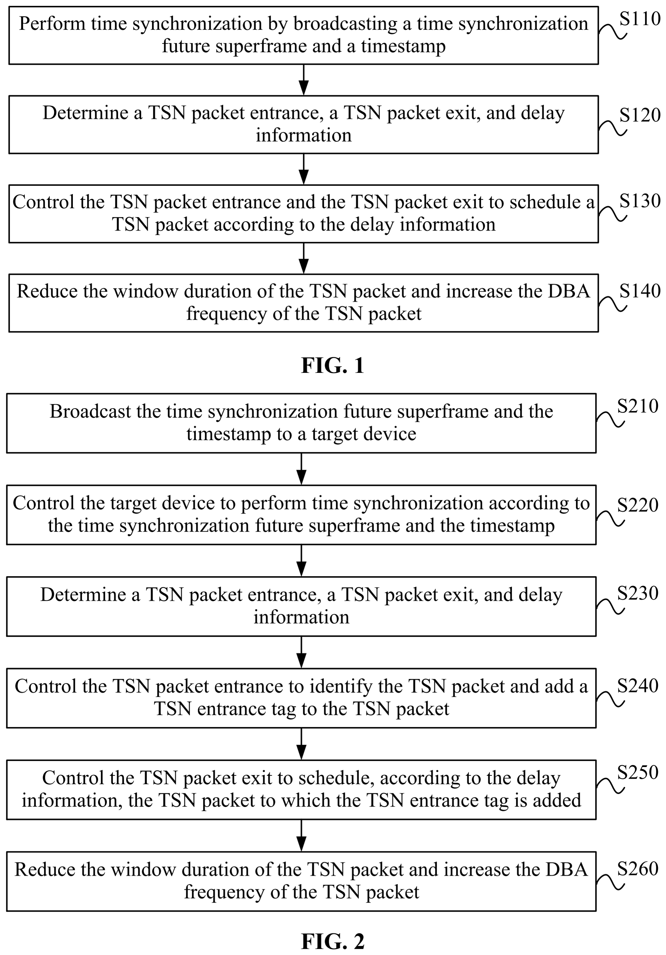

FIG. 1 is a flowchart of a method for implementing a time-sensitive network for a passive optical network system according to an embodiment of the present application. The embodiment of the present application may be applied to the case of implementing the TSN. The method may be performed by the PON system. The apparatus may be implemented by software and/or hardware. Referring to FIG. 1, the method provided in the embodiment of the present application specifically includes the following:

In 110, time synchronization is performed by broadcasting a time synchronization future superframe and a timestamp.

The time synchronization future superframe may be data for indicating time synchronization, the time synchronization future superframe may include the waiting time required for time synchronization, and the timestamp may be information for identifying the sending time of the time synchronization future superframe.

In the embodiment of the present application, the time synchronization future superframe and the timestamp may be broadcast in the PON system, and different devices in the PON system may perform time synchronization according to the received time synchronization future superframes and timestamps, thereby ensuring the time consistency among different devices in the PON system.

In 120, a TSN packet entrance, a TSN packet exit, and delay information are determined.

The TSN packet entrance and the TSN packet exit may be the devices through which the TSN packet enters and exists in the TSN implemented by the PON system. The delay information may be the time domain of information transmission in the TSN implemented by the PON system.

In the embodiment of the present application, the TSN packet entrance for receiving the TSN packet and the TSN packet exit for outputting the TSN packet may be determined in the PON system, and the delay information may be set for the implemented TSN. It is to be understood that the TSN packet exit, the TSN packet entrance, and the delay information in the PON system may be determined by the upper-layer command indication, configuration, or pre-configuration.

In 130, the TSN packet entrance and the TSN packet exit are controlled to schedule a TSN packet according to the delay information.

In the embodiment of the present application, the PON system may schedule the TSN packet according to the delay information so that the duration from the time when the TSN packet enters from the TSN packet entrance to the time when the TSN packet is outputted from the TSN packet exit satisfies the requirements of the delay information. It is to be understood that the time for the TSN packet to be transmitted in the TSN implemented by the PON system may be equal to the delay information determined in the preceding steps.

In 140, the window duration of the TSN packet is reduced and the DBA frequency of the TSN packet is increased.

The window duration may be the duration during which the TSN packet is transmitted, and the DBA frequency may be the bandwidth assignment frequency for the TSN packet transmission.

Specifically, in the PON system, the window duration of the TSN packet may be reduced and the DBA frequency may be increased, thereby achieving the transmission delay and jitter of the TSN packet in the PON system.

In the embodiment of the present application, time synchronization is performed by broadcasting the time synchronization future superframe and the timestamp, the TSN packet entrance, the TSN packet exit, and the delay information of the TSN are determined, the TSN packet entrance and the TSN packet exit are controlled to schedule the TSN packet according to the delay information, the window duration of the TSN packet is reduced, and the DBA frequency of the TSN packet is increased, thereby implementing the TSN based on the PON system, achieving fixed low-latency transmission of the TSN packet, and reducing the transmission jitters of the TSN packet.

In some embodiments of the present application, the time synchronization future superframe is broadcasted via at least one of the following: an optical line terminal-gateway (OLT-G) message, a private optical network unit management and control interface (OMCI) message, a private Physical Layer Operations, Administration and Maintenance (PLOAM) message, a private Operations, Administration, and Maintenance (OAM) message, or a private multi-point control protocol (MPCP) message.

In the embodiment of the present application, the PON system may include a GPON system and an EPON system. In the GPON system, the time synchronization future superframe and the timestamp may be broadcast and sent via one or more of the OLT-G message, the private OMCI message, or the private PLOAM message. In the EPON system, the time synchronization future superframe and the timestamp may be sent via the private OAM message or the private MPCP message.

FIG. 2 is a flowchart of another method for implementing a time-sensitive network for a passive optical network system according to an embodiment of the present application. This embodiment of the present application is embodied based on the preceding embodiment of the present application. Referring to FIG. 2, the method provided in this embodiment of the present application specifically includes the following:

In 210, the time synchronization future superframe and the timestamp are broadcast to a target device, where the target device includes at least one of an ONU, an SFU, or an MFU.

The target device may be a component device of the PON system. Based on different structures of the formed PON system, the target device may include one or more of the ONU, the SFU, or the MFU.

In the embodiment of the present application, the PON system may broadcast the time synchronization future superframe and the timestamp to the target devices such as the ONU, the SFU, and the MFU in the PON system.

In 220, the target device is controlled to perform time synchronization according to the time synchronization future superframe and the timestamp.

In the embodiment of the present application, each target device may perform time synchronization according to the received time synchronization future superframe and timestamp. It is to be understood that due to different types and positions of target devices in the PON system, different target devices may perform time synchronization based on the time synchronization future superframes and the timestamps in different manners.

In some embodiments of the present application, that the target device is controlled to perform time synchronization according to the time synchronization future superframe and the timestamp includes at least one of the following.

In a GPON system, the sum of a timestamp second time of the time synchronization future superframe, a timestamp nanosecond time of the time synchronization future superframe, the equalization delay of the target device, and the minimum response time of the target device is used as a timestamp after synchronization for the target device; or in an EPON system, the sum of a timestamp second time of the time synchronization future superframe, a timestamp nanosecond time of the time synchronization future superframe, and the waiting time of the target device is used as a timestamp after synchronization for the target device.

The time synchronization future superframe at least includes the timestamp second time and the timestamp nanosecond time so that time synchronization can be accurate to the nanosecond level, thereby improving the transmission accuracy of the TSN packet.

In the embodiment of the present application, different time synchronization manners may be adopted for different PON systems. In the GPON system, the timestamp second time and the timestamp nanosecond time of the time synchronization future superframe may be extracted, the equalization delay and the minimum response time of the target device may be acquired, and the sum of the preceding parameters may be used as the timestamp after synchronization for the target device. The time synchronization process may be expressed below.

$$\text{TimeStamp}_{newi} = \text{TimeStamp}_{(s)} + \text{TimeStamp}_{(ns)} + \text{EqD}_{(i)} + \text{RspTime}_{(i)}.$$

TimeStamp$_{(s)}$ and TimeStamp$_{(ns)}$ denote the timestamp second time and the timestamp nanosecond time received through broadcasting, EqD$_{(i)}$ denotes the equalization delay of the target device, and RspTime$_{(i)}$ denotes the minimum response time of the target device.

In the EPON system, the timestamp second time and timestamp nanosecond time of the time synchronization future superframe and the waiting time of the target device may be extracted, and the sum of the timestamp second time of the time synchronization future superframe, the timestamp nanosecond time of the time synchronization future superframe, and the waiting time of the target device may be used as the timestamp after synchronization for the target device. The time synchronization process may be expressed below.

$$\text{TimeStamp}_{newi}=\text{TimeStamp}_{(s)}+\text{TimeStamp}_{(ns)}+\text{Twait}_{(i)}.$$

TimeStamp$_{(s)}$ and TimeStamp$_{(ns)}$ denote the timestamp second time and the timestamp nanosecond time received through broadcasting, and Twait$_{(i)}$ denotes the waiting time of the target device.

In 230, a TSN packet entrance, a TSN packet exit, and delay information are determined.

In some embodiments of the present application, the TSN packet entrance, the TSN packet exit, and the delay information are determined via at least one of the following: an OLT command, network management, a World Wide Web (WEB) page, or mobile phone application software.

In the embodiment of the present application, operation and maintenance personnel may configure the TSN packet entrance, the TSN packet exit, and the delay information through one or more of the OLT command, the network management, the WEB page, or the mobile phone application software, thereby determining the TSN packet entrance, the TSN packet exit, and the delay information of the TSN in the PON system.

In 240, the TSN packet entrance is controlled to identify the TSN packet and a TSN entrance tag is added to the TSN packet.

The TSN entrance tag may be a tag set at the TSN packet entrance, and the TSN entrance tag may identify the time when the TSN packet enters the TSN packet entrance.

In the embodiment of the present application, the TSN packet entrance may monitor the TSN packet. When the TSN packet is identified, the TSN entrance tag may be added to the TSN packet to identify the time when the TSN packet enters the TSN.

In some embodiments of the present application, the TSN entrance tag at least includes an entrance timestamp.

In 250, the TSN packet exit is controlled to schedule, according to the delay information, the TSN packet to which the TSN entrance tag is added.

In the embodiment of the present application, the TSN packet exit may receive the TSN packet transmitted from the TSN packet entrance. The TSN packet exit may extract the TSN entrance tag added to the TSN packet and schedule the TSN packet according to the TSN entrance tag and the previously determined delay information so that the transmission delay of the TSN packet in the TSN is equal to the delay information.

In 260, the window duration of the TSN packet is reduced and the DBA frequency of the TSN packet is increased.

In some embodiments of the present application, the reduction amount of the window duration is determined according to the transmission optical fiber distance of the TSN packet.

In the embodiment of the present application, the reduction amount of the window duration may be determined according to the transmission optical fiber distance of the TSN packet. When the maximum optical fiber distance is 2 km, the window duration may be reduced to within 100 μs.

In some embodiments of the present application, each of the TSN packet entrance and the TSN packet exit includes at least one of the following: an OLT uplink port, an ONU, an SFU, an MFU Ethernet port, or a wireless network port.

In some embodiments of the present application, the TSN entrance tag is added before or after a virtual local area network (VLAN) tag of a standard Ethernet packet for the TSN packet.

In the embodiment of the present application, the TSN packet entrance modifies the standard Ethernet packet to add the TSN entrance tag, and the TSN entrance tag may be added before or after the VLAN tag of the standard Ethernet packet.

In some embodiments of the present application, that the TSN packet exit is controlled to schedule, according to the delay information, the TSN packet to which the TSN entrance tag is added includes the following:

The TSN packet exit is controlled to determine, according to an entrance timestamp of the TSN entrance tag and the delay information, whether the TSN packet reaches the specified delay time of the delay information.

In response to determining that the TSN packet does not reach the specified delay time, the TSN packet exit is controlled to cache the TSN packet until the TSN packet reaches the specified delay time.

In response to determining that the TSN packet reaches the specified delay time, the TSN packet exit is controlled to remove the TSN entrance tag and transmit the TSN packet.

In response to determining that the TSN packet exceeds the specified delay time, the TSN packet exit is controlled to discard the TSN packet or remove the TSN entrance tag and transmit the TSN packet.

In the embodiment of the present application, the TSN packet exit extracts the entrance timestamp of the TSN entrance tag and makes a determination according to the entrance timestamp and the specified delay time of the delay information. The determination results have three cases.

In the first case, through the TSN entrance tag of the TSN packet, the TSN packet exit determines that the transmission duration of the TSN packet in the TSN is less than the specified delay time of the delay information, and then the TSN packet exit stores the TSN packet for a period of time until the transmission duration of the TSN packet is equal to the duration specified by the delay information.

In the second case, through the TSN entrance tag of the TSN packet, the TSN packet exit determines that the transmission duration of the TSN packet in the TSN is equal to the specified delay time of the delay information, and the TSN packet exit removes the TSN entrance tag of the TSN packet and transmits the TSN packet out of the TSN.

In the third case, through the TSN entrance tag of the TSN packet, the TSN packet exit determines that the transmission duration of the TSN packet in the TSN is greater than the specified delay time of the delay information, the TSN packet exit may discard the TSN packet or remove the TSN entrance tag of the TSN packet, and then the TSN packet exit transmits the TSN packet out of the TSN.

In the embodiment of the present application, the TSN packet exit may determine whether the TSN packet reaches the specified delay time of the delay information according to the time difference between the time of arrival of the TSN packet and the entrance timestamp of the TSN entrance tag.

In some embodiments of the present application, the method further includes: controlling the TSN packet exit to schedule, according to an existing scheduling rule, the TSN packet to which the TSN entrance tag is not added.

Specifically, when the TSN packet exit identifies the TSN packets to each of which the TSN entrance tag is not added, these TSN packets may be scheduled according to the existing scheduling rule. It is to be understood that the existing scheduling rule may include a strict priority (SP) scheduling rule, a weighted round robin (WRR) scheduling rule, or an SP+WRR scheduling rule.

In an example embodiment, the TSN is implemented according to the PON system. The method may specifically include the following:

   1. Time synchronization is performed by broadcasting a time synchronization future superframe (e.g., future SFC) and a timestamp.

Specifically, the PON system needs to perform time synchronization before implementing TSN packet scheduling. In the PON system, the OLT, the ONU, the MFU, the SFU, and other devices may perform time synchronization by broadcasting the time synchronization future superframe and the timestamp corresponding to the time synchronization future superframe. In the EPON system, the time synchronization future superframe (e.g., future SFC) may be replaced by Timestamp (e.g., mpcp).

In the GPON system, the OLT-G message defined in the G.988 standard may be reused to send the time synchronization future superframe value, or the time synchronization future superframe value may be sent via the private OMCI message or the private PLOAM message. The field definition when the time synchronization future superframe value is sent through the OLT-G message is shown in Table 1 below. Time of day information (14 bytes) consists of four parts: SFC, TimeStamp(s), TimeStamp(ns), and Reserved.

Table 1 OLT-G message field definition

| Field | Number of bytes | Description |
|---|---|---|
| Managed entity ID | 2 | ME ID, No. 0 |
| OLT vendor ID | 4 | OLT/MFU supplier logo |
| Equipment ID | 20 | OLT/MFU device type indicator |
| Version | 14 | OLT/MFU version number |
| SFC | 4 | Time synchronization future superframe value |
| TimeStamp(s) | 4 | timestamp second time corresponding to the time synchronization future superframe value |
| TimeStamp(ns) | 4 | timestamp nanosecond time corresponding to the time synchronization future superframe value |
| Reserved | 2 | Reserved bytes, which may be used for TimeStamp expansion |

In the EPON system, the time synchronization future superframe and the timestamp may be sent via the private OAM message or the private MPCP message.

After the ONU/SFU or MFU uplink PON port receives the time synchronization future superframe and the timestamp, the timestamp needs to be corrected. In the GPON system, the correction algorithm is described below. $TimeStamp_{newi}$ denotes the corrected timestamp of ONUi, $TimeStamp_{(s)}$ and $TimeStamp_{(ns)}$ denote the timestamp second time and timestamp nanosecond time received through broadcasting, $EqD_{(i)}$ denotes the equalization delay of ONUi, and $RspTime_{(i)}$ denotes the minimum response time of ONUi. When the time synchronization future superframe of the downlink frame received by ONUi is consistent with the time synchronization future superframe received through broadcasting, ONUi needs to perform time synchronization based on $TimeStamp_{newi}$.

$$TimeStamp_{newi}=TimeStamp_{(s)}+TimeStamp_{(ns)}+EqD_{(i)}+RspTime_{(i)}.$$

In the EPON system, the correction algorithm is described below. $TimeStamp_{newi}$ denotes the corrected timestamp of ONUi, $TimeStamp_{(s)}$ and $TimeStamp_{(ns)}$ denote the timestamp second time and timestamp nanosecond time received through broadcasting, and $Twait_{(i)}$ denotes the waiting time of ONUi. When $Timestamp_{(mpcp)}$ in the downlink frame MPCP message received by ONUi is consistent with the future $Timestamp_{(mpcp)}$ received through broadcasting, ONUi needs to perform time synchronization based on $TimeStamp_{newi}$.

$$TimeStamp_{newi}=TimeStamp_{(s)}+TimeStamp_{(ns)}+Twait_{(i)}.$$

When many ONUs or SFUs exist under the PON system, the calculation amount and computing resource consumption of the devices in the PON system can be effectively reduced by broadcasting the time synchronization future superframes and the timestamps. The time synchronization information is regularly updated through the timer or the interrupts to ensure the TSN scheduling accuracy.

2. The TSN packet entrance, the TSN packet exit, and the delay information in the PON system are determined.

Specifically, after the PON system completes time synchronization, the TSN packet entrance, the TSN packet exit, and the TSN packet transmission delay information in the PON system need to be determined. Each of the TSN packet entrance and the TSN packet exit may be the OLT uplink port, the ONU/SFU or MFU Ethernet port, or the wireless network port. The delay information may be sent in units of $\mu$s. For example, the TSN packet is scheduled with a fixed delay of 500 $\mu$s at the entrance and exit.

In the embodiment of the present application, the TSN packet entrance, the TSN packet exit, and the delay information may be configured according to the actual service scenario through the OLT command line, the network management, the WEB page, the mobile phone APP, and other media. For example, in the FTTR networking scenario of the industrial PON system, the TSN scheduling of a fixed delay of 500 $\mu$s for specific control signaling packets between two SFU Ethernet ports may be configured through the mobile phone APP to satisfy the TSN service requirements of the industrial PON system.

3. The TSN packet entrance identifies the TSN packet and adds the TSN entrance tag to the TSN packet.

Specifically, the TSN packet entrance may identify the TSN packets according to instructions configured by other media. For example, the TSN packet entrance may be configured through the OLT command line to match the specific VLAN packets as the TSN packets. The TSN packet entrance may automatically identify the TSN packets according to service scenarios. In the FTTR networking scenario of the industrial PON system, the TSN packet entrance automatically identifies the specific control signaling packets as the TSN packets. The TSN packet entrance may add the TSN entrance tag to the identified TSN packet.

In the embodiment of the present application, the TSN entrance tag at least includes an entrance timestamp, which may be in units of ns. When TSN scheduling and statistics need to be performed on multiple flows at the TSN packet entrance and the TSN packet exit, different flows need to be distinguished by different flowids, and Seqnum needs to perform statistics on the TSN packets of the same flow. The TSN entrance tag may be added before or after the VLAN tag of the standard Ethernet packet. It is to be understood that the same PON system needs to use a unified TSN entrance tag so that it is convenient for the TSN packet exit to process the TSN packets.

4. The TSN packet exit performs TSN scheduling based on the TSN entrance tag.

Specifically, the TSN packet exit determines whether the TSN packet has the TSN entrance tag. If the TSN packet has the TSN entrance tag, based on the entrance timestamp of the TSN entrance tag and the delay information, the TSN packet exit determines whether the TSN packet reaches the delay time. If the TSN packet does not reach the delay time, the TSN packet continues being cached. If the TSN packet reaches the delay time, the TSN entrance tag is removed and then the TSN packet is sent preferentially. If the TSN packet exceeds the delay time, the PON system may choose to discard the TSN packet or continue sending the TSN packet. If no TSN entrance tag exists, SP scheduling, WRR scheduling, or SP+WRR scheduling is performed on the packet according to the existing scheduling rule.

To ensure the TSN packet scheduling accuracy, the TSN scheduling priority usually needs to be higher than the traditional SP/WRR or SP+WRR scheduling priority. Moreover, different flowid packets are cached and scheduled through different queues. For example, the LAN port contains eight exit queues, four of the eight exit queues may be selected for TSN packet caching and scheduling, and the other four queues may be selected for SP, WRR, or SP+WRR scheduling. The TSN queue scheduling priority needs to be higher than the scheduling priorities of other queues. When scheduling conflicts occur between the TSN packets of different flowids, the TSN packet scheduling of the high-priority flowid may be prioritized. The flowid priority may be specified by other media such as the OLT command and the mobile phone APP.

5. The scheduling delay is further reduced by reducing the window duration and increasing the DBA scheduling frequency.

Specifically, the packet delay and jitter of the PON system are usually closely related to the SN, the ranging window, and the DBA scheduling cycle. For example, if the logical distance is 20 km, the SN and ranging window usually require 250 $\mu$s; the DBA frequency is once every four frames. In the case where the bandwidth is relatively small, the maximum DBA delay reaches 500 $\mu$s.

To further reduce the scheduling delay of the packets, including TSN packets and traditional SP, WRR, or SP+WRR scheduled packets, the window duration may be reduced and the DBA frequency may be increased. For example, in the FTTR networking scenario of the industrial PON system, the maximum optical fiber distance is generally not more than 2 km, the window duration may be reduced to within 100 $\mu$s, the bandwidth is allocated to a specific Alloc-ID multiple times within a frame, and the DBA delay may be reduced to within 125 $\mu$s, thereby reducing the packet scheduling delay in the PON channel.

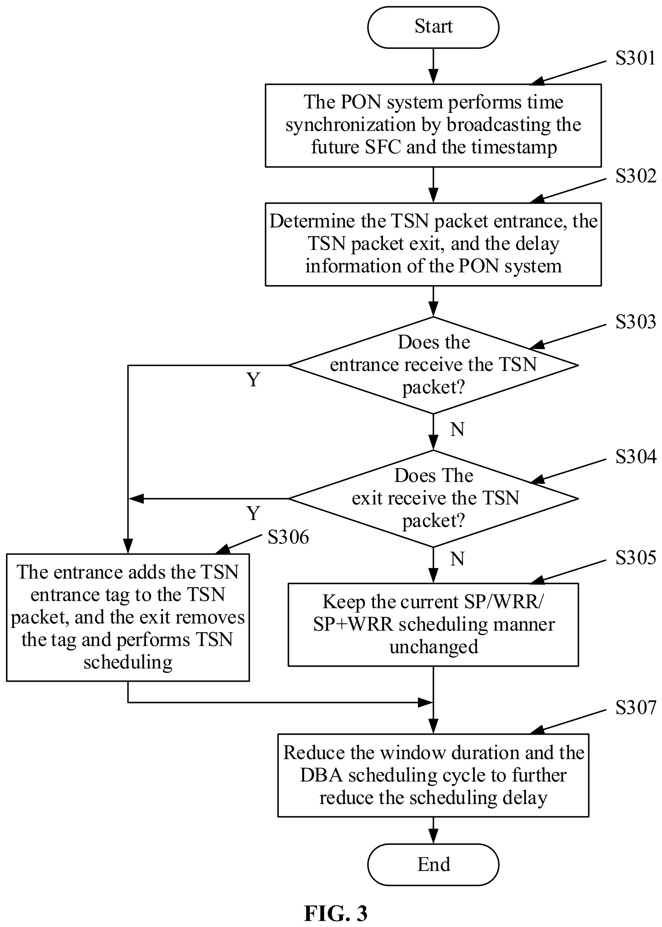

In an example embodiment, FIG. 3 is an example diagram of a method for implementing a time-sensitive network for a passive optical network system according to an embodiment of the present application. Referring to FIG. 3, the present application provides a method for implementing a TSN for a PON system, and the method includes the following:

In S301, the PON system performs time synchronization by broadcasting the future SFC and the timestamp, and in the EPON system, the future SFC is replaced by Timestamp(mpcp).

In S302, the TSN packet entrance, the TSN packet exit, and the delay information of the PON system may be configured according to the actual service scenario through the OLT command line, the network management, the WEB page, the mobile phone APP, and other media.

In S303, whether the TSN packet entrance receives the TSN packet is determined. If so, S306 is performed; if not, S304 is performed.

In S304, whether the TSN packet exit receives the TSN packet is determined. If so, S306 is performed; if not, S305 is performed.

In S305, the current SP/WRR or SP+WRR scheduling manner is kept unchanged.

In S306, the entrance adds the TSN entrance tag to the TSN packet, and the exit removes the TSN entrance tag and performs TSN scheduling.

In S307, the PON system reduces the SN, the ranging window, and the DBA scheduling cycle to further reduce the scheduling delay, including the TSN scheduling delay and the traditional SP, WRR, or SP+WRR scheduling delay.

The method provided in the embodiment of the present application may be applied to different network architectures of the PON system.

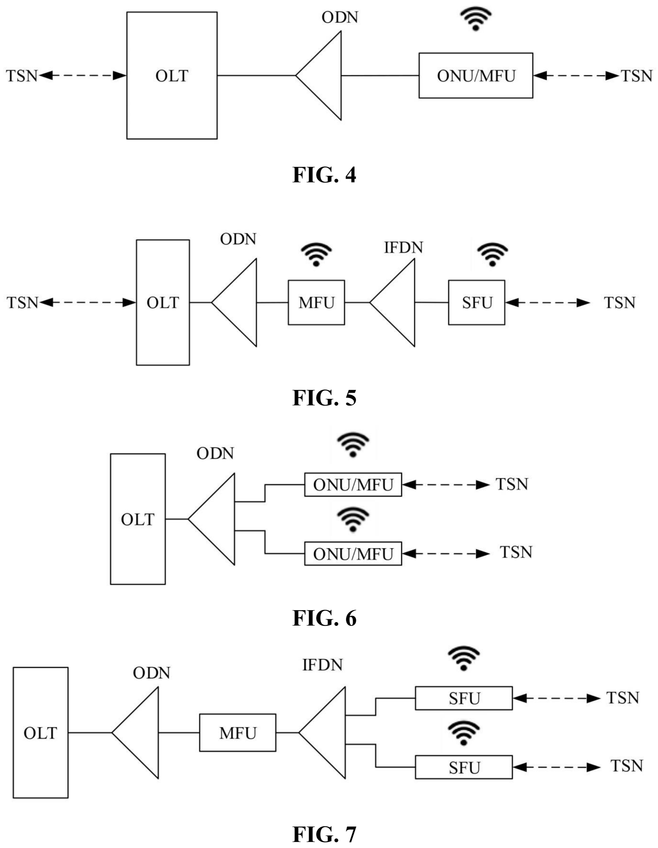

Referring to FIG. 4, the OLT is connected to the ONU/MFU through the ODN. The uplink entrance of TSN packet scheduling is the ONU/MFU Ethernet port or the wireless network port, and the uplink exit is the OLT uplink port. The downlink entrance of TSN packet scheduling is the OLT uplink port, and the downlink exit is the ONU/MFU Ethernet port or the wireless network port. The entrance, the exit, and the scheduling delay may be configured through media such as the OLT command line and the mobile phone APP.

Referring to FIG. 5, the OLT is connected to the MFU through the ODN, and the MFU is connected to the SFU through the IFDN. The uplink entrance of TSN packet scheduling is the SFU Ethernet port or the wireless network port, and the uplink exit is the OLT uplink port. The downlink entrance of TSN packet scheduling is the OLT uplink port, and the downlink exit is the SFU Ethernet port or the wireless network port. The entrance, the exit, and the scheduling delay may be configured through media such as the OLT command line and the mobile phone APP.

Referring to FIG. 6, the OLT is connected to the ONUs/MFUs through the ODN, and the two ONUs/MFUs communicate with each other in the east-west direction. The entrance and exit of TSN packet scheduling are the Ethernet ports or wireless network ports of the two ONUs/MFUs. The entrance, the exit, and the scheduling delay may be configured through media such as the OLT command line and the mobile phone APP.

Referring to FIG. 7, the OLT is connected to the MFU through the ODN, the MFU is connected to the SFUs through the IFDN, and the two SFUs communicate with each other in the east-west direction. The entrance and exit of TSN packet scheduling are the Ethernet ports or wireless network ports of the two SFUs. The entrance, the exit, and the scheduling delay may be configured through media such as the OLT command line and the mobile phone APP.

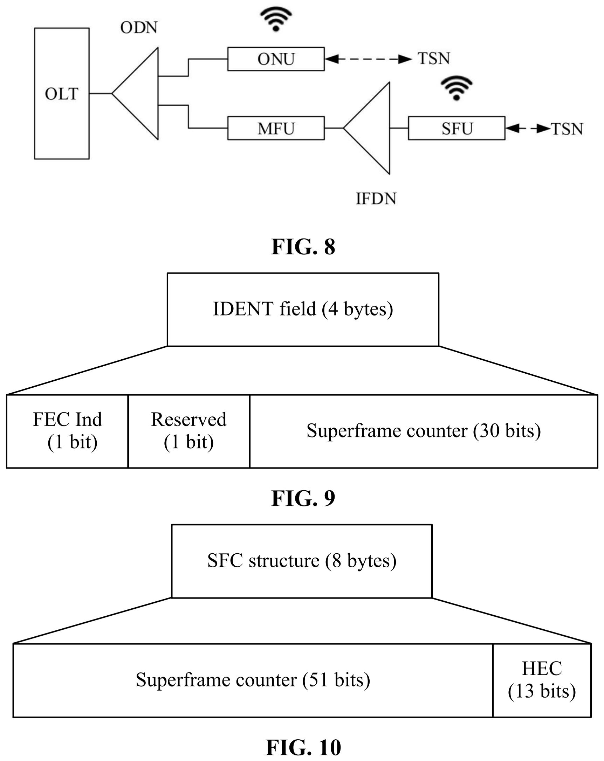

Referring to FIG. 8, the OLT is connected to the ONU and the MFU through the ODN, the MFU is connected to the SFU through the IFDN, and the ONU and the SFU communicate with each other in the east-west direction. The entrance and exit of TSN packet scheduling are the Ethernet ports or wireless network ports of the ONU and the SFU. The entrance, the exit, and the scheduling delay may be configured through media such as the OLT command line and the mobile phone APP.

Referring to FIG. 9, in the embodiment of the present application, the G.984.3 standard downlink superframe IDENT field used for broadcasting in the preceding PON system includes an FEC Ind indication bit, a Reserved bit, and a Superframe counter indication bit. ONUi may receive the time synchronization future superframe and the timestamp corresponding to the time synchronization future superframe. ONUi may correct the timestamp of ONUi. When the Superframe counter indication bit of the downlink frame is consistent with the time synchronization future superframe, ONUi performs time synchronization based on the corrected timestamp.

As shown in FIG. 10, in the embodiment of the present application, the G.987.3/G.9807.1/G.9804.2 standard downlink frame SFC structure field used for broadcasting in the preceding PON system includes a Superframe counter indication bit and an HEC check bit. After ONUi receives the future SFC and the timestamp corresponding to the future SFC, ONUi corrects the timestamp. When the Superframe counter indication bit of the downlink frame is consistent with the future SFC, ONUi performs time synchronization based on the corrected timestamp.

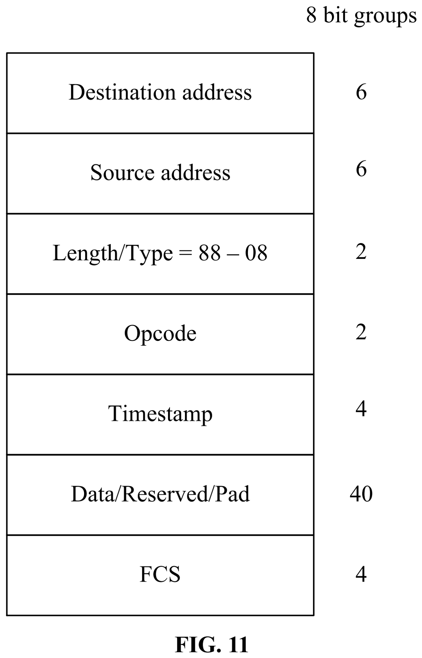

Referring to FIG. 11, the IEEE 802.3 standard downlink frame MPCPDU of the timestamp used for broadcasting in the preceding PON system includes indication bits such as Destination Address, Source Address, Length/Type, Opcode, Timestamp, Data/Reserved/Pad, and Frame Check Sequence (FCS). After ONUi receives the future Timestamp$_{(mpcp)}$ and the timestamp corresponding to the future Timestamp$_{(mpcp)}$, ONUi corrects the timestamp. When the Timestamp indication bit of the downlink frame is consistent with the future Timestamp$_{(mpcp)}$, ONUi performs time synchronization based on the corrected timestamp.

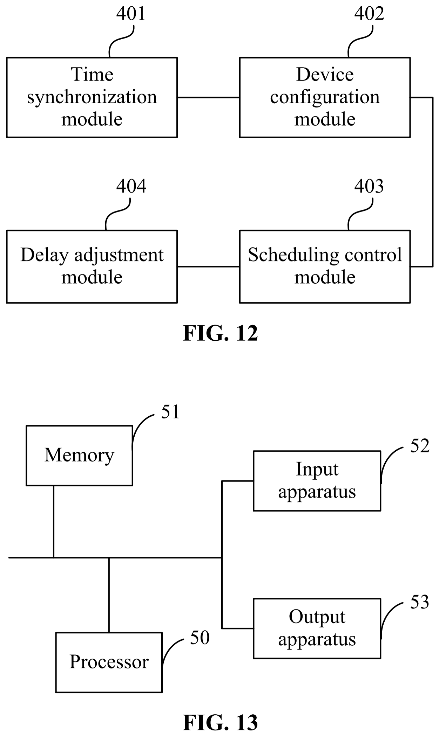

FIG. 12 is a diagram illustrating the structure of an apparatus for implementing a time-sensitive network for a passive optical network system according to an embodiment of the present application. The apparatus may perform the method for implementing a time-sensitive network for a passive optical network system provided in any embodiment of the present application and has function modules and beneficial effects corresponding to the performed method. The apparatus may be implemented by software and/or hardware, is generally integrated in the PON system, and may be an OLT device or a host computer. Referring to FIG. 12, the message sending apparatus specifically includes a time synchronization module 401, a device configuration module 402, a scheduling control module 403, and a delay adjustment module 404.

The time synchronization module 401 is configured to perform time synchronization by broadcasting a time synchronization future superframe and a timestamp.

The device configuration module 402 is configured to determine a TSN packet entrance, a TSN packet exit, and delay information.

The scheduling control module 403 is configured to control the TSN packet entrance and the TSN packet exit to schedule a TSN packet according to the delay information.

The delay adjustment module 404 is configured to reduce the window duration of the TSN packet and increase the DBA frequency of the TSN packet.

In some embodiments of the present application, the time synchronization future superframe is broadcasted via at least one of the following: an OLT-G message, a private OMCI message, a private PLOAM message, a private OAM message, or a private MPCP message.

In some embodiments of the present application, the time synchronization module 401 includes an information broadcasting unit and a synchronization control unit.

The information broadcasting unit is configured to broadcast the time synchronization future superframe and the timestamp to a target device, where the target device includes at least one of an ONU, an SFU, or an MFU.

The synchronization control unit is configured to control the target device to perform time synchronization according to the time synchronization future superframe and the timestamp.

In some embodiments of the present application, the synchronization control unit is specifically configured to perform the following: in a GPON system, the sum of a timestamp second time of the time synchronization future superframe, a timestamp nanosecond time of the time synchronization future superframe, the equalization delay of the target device, and the minimum response time of the target device is used as a timestamp after synchronization for the target device; or in an EPON system, the sum of a timestamp second time of the time synchronization future superframe, a timestamp nanosecond time of the time synchronization future superframe, and the waiting time of the target device is used as a timestamp after synchronization for the target device.

In some other embodiments of the present application, in the device configuration module 402, the TSN packet entrance, the TSN packet exit, and the delay information are determined via at least one of the following: an OLT command, network management, a WEB page, or mobile phone application software.

In some other embodiments of the present application, in the apparatus, each of the TSN packet entrance and the TSN packet exit includes at least one of the following: an OLT uplink port, an ONU, an SFU, an MFU Ethernet port, or a wireless network port.

In some embodiments of the present application, the scheduling control module 403 is specifically configured to: control the TSN packet exit to determine, according to an entrance timestamp of the TSN entrance tag and the delay information, whether the TSN packet reaches the specified delay time of the delay information; in response to determining that the TSN packet does not reach the specified delay time, control the TSN packet exit to cache the TSN packet until the TSN packet reaches the specified delay time; in response to determining that the TSN packet reaches the specified delay time, control the TSN packet exit to remove the TSN entrance tag and transmit the TSN packet; and in response to determining that the TSN packet exceeds the specified delay time, control the TSN packet exit to discard the TSN packet or remove the TSN entrance tag and transmit the TSN packet.

In some embodiments of the present application, the scheduling control module 403 is further configured to control the TSN packet exit to schedule, according to an existing scheduling rule, the TSN packet to which the TSN entrance tag is not added.

In some embodiments of the present application, in the delay adjustment module 404, the reduction amount of the window duration is determined according to the transmission optical fiber distance of the TSN packet.

FIG. 13 is a diagram illustrating the structure of an electronic device according to an embodiment of the present application. The electronic device includes a processor 50, a memory 51, an input apparatus 52, and an output apparatus 53. One or more processors 50 may be provided in the electronic device. One processor 50 is shown as an example in FIG. 13. The processor 50, the memory 51, the input apparatus 52, and the output apparatus 53 in the electronic device may be connected via a bus or in other manners. The connection via a bus is shown as an example in FIG. 13.

As a computer-readable storage medium, the memory 51 may be configured to store software programs, computer-executable programs, and modules, for example, modules (the time synchronization module 401, the device configuration module 402, the scheduling control module 403, and the delay adjustment module 404) corresponding to the network optimization apparatus in the embodiment of the present application. The processor 50 executes software programs, instructions, and modules stored in the memory 51 to perform function applications and data processing of the electronic device, that is, to perform the preceding method.

The memory 51 may mainly include a program storage region and a data storage region. The program storage region may store an operating system and an application program required by at least one function. The data storage region may store data created according to the use of the electronic device. Additionally, the memory 51 may include a high-speed random-access memory and may further include a non-volatile memory such as at least one magnetic disk memory, a flash memory, or another non-volatile solid-state memory. In some examples, the memory 51 may also be a memory remote from the processor 50 and connectable to the electronic device via a network. Examples of the network include, but are not limited to, the Internet, an intranet, a local area network, a mobile communication network, and a combination thereof.

The input apparatus 52 may be configured to receive inputted digital or character information and generate key signal input related to user settings and function control of the electronic device. The output apparatus 53 may include a display device such as a display screen.

An embodiment of the present application provides a storage medium including computer-executable instructions which, when executed by a computer processor, cause the processor to perform a method for implementing a time-sensitive network for a passive optical network system. The method includes the following:

Time synchronization is performed by broadcasting a time synchronization future superframe and a timestamp.

A TSN packet entrance, a TSN packet exit, and delay information are determined.

The TSN packet entrance and the TSN packet exit are controlled to schedule a TSN packet according to the delay information.

The window duration of the TSN packet is reduced and the DBA frequency of the TSN packet is increased.

From the preceding description of embodiments, it is apparent to those skilled in the art that the present application may be implemented by software and necessary general-purpose hardware or may be implemented by hardware, but the former is a preferred implementation in many cases. Based on this understanding, the technical solutions of the present application substantially, or the part contributing to the related art, may be embodied in the form of a software product. The computer software product may be stored in a computer-readable storage medium such as a floppy disk, a read-only memory (ROM), a random-access memory (RAM), a flash memory, a hard disk, or an optical disc of a computer and includes several instructions for causing a computer device (which may be a personal computer, a server, or a network device) to perform the methods in the embodiments of the present application.

It is to be noted that units and modules included in the preceding embodiment of the apparatus are divided according to functional logic, and the division is not limited to this as long as the corresponding functions can be implemented. Additionally, the specific names of function units are used for distinguishing between each other and are not to limit the scope of the present application.

It is to be understood by those of ordinary skill in the art that some or all steps of the preceding method and function modules/units in the preceding system or device may be implemented as software, firmware, hardware, and suitable combinations thereof.

In the hardware implementation, the division of the preceding function modules/units may not correspond to the division of physical components. For example, one physical component may have multiple functions, or one function or step may be performed jointly by multiple physical components. Some or all physical components may be implemented as software executed by a processor such as a central processing unit, a digital signal processor, or a microprocessor, may be implemented as hardware, or may be implemented as integrated circuits such as application-specific integrated circuits. Such software may be distributed on computer-readable media. The computer-readable media may include computer storage media (or non-transitory media) and communication media (or transitory media). As is known to those having ordinary skill in the art, the term computer storage media includes volatile and nonvolatile media as well as removable and non-removable media implemented in any method or technology for storing information (such as computer-readable instructions, data structures, program modules, or other data). The computer storage media include, but are not limited to, a RAM, a ROM, an electrically erasable programmable read-only memory (EEPROM), a flash memory or other memory technologies, a portable compact disc read-only memory (CD-ROM), a digital versatile disc (DVD) or other optical storages, a magnetic cassette, a magnetic tape, a magnetic disk or other magnetic storage devices, or any other medium that is used for storing desired information and that can be accessed by a computer. Additionally, as is known to those having ordinary skill in the art, the communication media generally include computer-readable instructions, data structures, program modules, or other data in carriers or in modulated data signals transported in other transport mechanisms and may include any information delivery medium.

The preferred embodiments of the present application are described above with reference to the drawings and are not intended to limit the scope of the claims of the present application. Any modifications, equivalent substitutions, and improvements made by those skilled in the art without departing from the scope and substantive content of the present application fall within the scope of the present application.

**Claims**

1. A method for implementing a time-sensitive network for a passive optical network system, comprising:

   performing time synchronization by broadcasting a time synchronization future superframe and a timestamp;
   determining a time-sensitive network, TSN, packet entrance, a TSN packet exit, and delay information;
   controlling the TSN packet entrance and the TSN packet exit to schedule a TSN packet according to the delay information; and
   reducing a window duration of the TSN packet and increasing Dynamically Bandwidth Assignment, DBA, frequency of the TSN packet.

2. The method of claim 1, wherein the time synchronization future superframe is broadcasted via at least one of the following:
   an optical line terminal-gateway, OLT-G, message, a private optical network unit management and control interface, OMCI, message, a private Physical Layer Operations, Administration and Maintenance, PLOAM, message, a private Operations, Administration, and Maintenance, OAM, message, or a private multi-point control protocol (MPCP) message.

3. The method of claim 1, wherein performing time synchronization by broadcasting the time synchronization future superframe and the timestamp comprises:

   broadcasting the time synchronization future superframe and the timestamp to a target device, wherein the target device comprises at least one of: an optical network unit, ONU, a sub fiber to the room unit, SFU, or a main fiber to the room unit, MFU; and
   controlling the target device to perform time synchronization according to the time synchronization future superframe and the timestamp.

4. The method of claim 3, wherein controlling the target device to perform time synchronization according to the time synchronization future superframe and the timestamp comprises at least one of the following:

   in a Gigabit-capable passive optical network, GPON, system, using a sum of a timestamp second time of the time synchronization future superframe, a timestamp nanosecond time of the time synchronization future superframe, an equalization delay of the target device, and a minimum response time of the target device as a timestamp after synchronization for the target device; or
   in an Ethernet passive optical network, EPON, system, using a sum of a timestamp second time of the time synchronization future superframe, a timestamp nanosecond time of the time synchronization future superframe, and a waiting time of the target device as a timestamp after synchronization for the target device.

5. The method of claim 1, wherein the TSN packet entrance, the TSN packet exit, and the delay information are determined via at least one of the following: an Optical Line Terminal, OLT, command, network management, a World Wide Web, WEB, page, or mobile phone application software.

6. The method of claim 1, wherein each of the TSN packet entrance and the TSN packet exit comprises at least one of the following: an OLT uplink port, an ONU Ethernet port, an SFU Ethernet port, an MFU Ethernet port, or a wireless network port.

7. The method of claim 1, wherein controlling the TSN packet entrance and the TSN packet exit to schedule the TSN packet according to the delay information comprises:

controlling the TSN packet entrance to identify the TSN packet and adding a TSN entrance tag to the TSN packet; and
controlling the TSN packet exit to schedule, according to the delay information, the TSN packet to which the TSN entrance tag is added.

8. The method of claim 7, wherein the TSN entrance tag at least comprises: an entrance timestamp.

9. The method of claim 7, wherein the TSN entrance tag is added before or after a virtual local area network (VLAN) tag of a standard Ethernet packet for the TSN packet.

10. The method of claim 7, wherein controlling the TSN packet exit to schedule, according to the delay information, the TSN packet to which the TSN entrance tag is added comprises:

controlling the TSN packet exit to determine, according to an entrance timestamp of the TSN entrance tag and the delay information, whether the TSN packet reaches a specified delay time of the delay information;
in response to determining that the TSN packet does not reach the specified delay time, controlling the TSN packet exit to cache the TSN packet until the TSN packet reaches the specified delay time;
in response to determining that the TSN packet reaches the specified delay time, controlling the TSN packet exit to remove the TSN entrance tag and transmit the TSN packet; and
in response to determining that the TSN packet exceeds the specified delay time, controlling the TSN packet exit to discard the TSN packet or remove the TSN entrance tag and transmit the TSN packet.

11. The method of claim 7, further comprising:
controlling the TSN packet exit to schedule, according to an existing scheduling rule, the TSN packet to which the TSN entrance tag is not added.

12. The method of claim 1, wherein a reduction amount of the window duration is determined according to a transmission optical fiber distance of the TSN packet.

13. An electronic device, comprising:

at least one processor, and
a memory configured to store at least one program;
wherein when executed by the at least one processor, the at least one program causes the at least one processor to perform the method for implementing a time-sensitive network for a passive optical network system of any one of claims 1 to 12.

14. A computer-readable storage medium storing at least one program which, when executed by at least one processor, causes the at least one processor to perform the method for implementing a time-sensitive network for a passive optical network system of any one of claims 1 to 12.

Perform time synchronization by broadcasting a time synchronization future superframe and a timestamp — S110

Determine a TSN packet entrance, a TSN packet exit, and delay information — S120

Control the TSN packet entrance and the TSN packet exit to schedule a TSN packet according to the delay information — S130

Reduce the window duration of the TSN packet and increase the DBA frequency of the TSN packet — S140

**FIG. 1**

Broadcast the time synchronization future superframe and the timestamp to a target device — S210

Control the target device to perform time synchronization according to the time synchronization future superframe and the timestamp — S220

Determine a TSN packet entrance, a TSN packet exit, and delay information — S230

Control the TSN packet entrance to identify the TSN packet and add a TSN entrance tag to the TSN packet — S240

Control the TSN packet exit to schedule, according to the delay information, the TSN packet to which the TSN entrance tag is added — S250

Reduce the window duration of the TSN packet and increase the DBA frequency of the TSN packet — S260

**FIG. 2**

Start

S301
The PON system performs time synchronization by broadcasting the future SFC and the timestamp

S302
Determine the TSN packet entrance, the TSN packet exit, and the delay information of the PON system

S303
Does the entrance receive the TSN packet?

Y

N

S304
Does The exit receive the TSN packet?

Y

N

S306
The entrance adds the TSN entrance tag to the TSN packet, and the exit removes the tag and performs TSN scheduling

S305
Keep the current SP/WRR/ SP+WRR scheduling manner unchanged

S307
Reduce the window duration and the DBA scheduling cycle to further reduce the scheduling delay

End

**FIG. 3**

**FIG. 4**

**FIG. 5**

**FIG. 6**

**FIG. 7**

**FIG. 8**

**FIG. 9**

**FIG. 10**

8 bit groups

| | |
|---|---|
| Destination address | 6 |
| Source address | 6 |
| Length/Type = 88 − 08 | 2 |
| Opcode | 2 |
| Timestamp | 4 |
| Data/Reserved/Pad | 40 |
| FCS | 4 |

**FIG. 11**

**FIG. 12**

**FIG. 13**

## INTERNATIONAL SEARCH REPORT

| | International application No. |
|---|---|
| | **PCT/CN2023/133262** |

| A. | CLASSIFICATION OF SUBJECT MATTER |
|---|---|

H04J3/16(2006.01)i;  H04W72/04(2023.01)i

According to International Patent Classification (IPC) or to both national classification and IPC

| B. | FIELDS SEARCHED |
|---|---|

Minimum documentation searched (classification system followed by classification symbols)

IPC: H04J,H04W

Documentation searched other than minimum documentation to the extent that such documents are included in the fields searched

Electronic data base consulted during the international search (name of data base and, where practicable, search terms used)

CNTXT, ENTXT, CNKI, VEN: 时间, 时延, 延时, 延迟, 敏感, 低, 要求, 入口, 出口, 同步, 超帧, 调度, 分配, 带宽, DBA, PON, OLT, ONU, ONT, time, delay, sensitive, low, request, port, input, output, synchronization, scheduler, superframe

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 113497986 A (ZTE CORP.) 12 October 2021 (2021-10-12)<br>see description, paragraphs 117-150 | 1-14 |
| Y | CN 113055205 A (CHINA TELECOM CORP., LTD.) 29 June 2021 (2021-06-29)<br>see description, paragraphs 46-89 | 1-14 |
| A | CN 112468411 A (ZHONGYING YOUCHUANG INFORMATION TECHNOLOGY CO., LTD.) 09 March 2021 (2021-03-09)<br>entire document | 1-14 |
| A | CN 114567827 A (HUAWEI TECHNOLOGIES CO., LTD.) 31 May 2022 (2022-05-31)<br>entire document | 1-14 |
| A | CN 102821029 A (ALCATEL-LUCENT SHANGHAI BELL CO., LTD.) 12 December 2012 (2012-12-12)<br>entire document | 1-14 |
| A | US 2010239255 A1 (IKEDA, H.; KAZAWA, T.) 23 September 2010 (2010-09-23)<br>entire document | 1-14 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 February 2024** | **18 February 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/133262**

| Patent document cited in search report | | | Publication date (day/month/year) | Patent family member(s) | | | Publication date (day/month/year) |
|---|---|---|---|---|---|---|---|
| CN | 113497986 | A | 12 October 2021 | None | | | |
| CN | 113055205 | A | 29 June 2021 | None | | | |
| CN | 112468411 | A | 09 March 2021 | None | | | |
| CN | 114567827 | A | 31 May 2022 | None | | | |
| CN | 102821029 | A | 12 December 2012 | WO | 2013072776 | A2 | 23 May 2013 |
| | | | | WO | 2013072776 | A3 | 12 September 2014 |
| US | 2010239255 | A1 | 23 September 2010 | JP | 2010219978 | A | 30 September 2010 |
| | | | | EP | 2230785 | A2 | 22 September 2010 |

Form PCT/ISA/210 (patent family annex) (July 2022)